(19) Europäisches Patentamt / European Patent Office / Office européen des brevets

(11) **EP 3 192 201 B1**

(12) **EUROPEAN PATENT SPECIFICATION**

(45) Date of publication and mention
of the grant of the patent:
**31.10.2018 Bulletin 2018/44**

(51) Int Cl.:
*H04L 1/16* (2006.01)     *H04L 5/00* (2006.01)
*H04W 72/04* (2009.01)     *H04W 4/02* (2018.01)
*H04W 72/12* (2009.01)     *H04W 74/04* (2009.01)
*H04L 1/18* (2006.01)

(21) Application number: **15840179.4**

(22) Date of filing: **11.09.2015**

(86) International application number:
**PCT/KR2015/009591**

(87) International publication number:
**WO 2016/039589 (17.03.2016 Gazette 2016/11)**

(54) **METHOD AND APPARATUS FOR TRANSMITTING AND RECEIVING ACKNOWLEDGMENT IN A WIRELESS COMMUNICATION SYSTEM**

VERFAHREN UND VORRICHTUNG ZUR SENDE- UND EMPFANGSBESTÄTIGUNG IN EINEM DRAHTLOSKOMMUNIKATIONSSYSTEM

PROCÉDÉ ET APPAREIL DE TRANSMISSION ET DE RÉCEPTION D'ACCUSÉ DE RÉCEPTION DANS UN SYSTÈME DE COMMUNICATIONS SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2014   US 201462049871 P**
**01.10.2014   US 201462058422 P**
**27.02.2015   US 201514634186**

(43) Date of publication of application:
**19.07.2017   Bulletin 2017/29**

(73) Proprietor: **Samsung Electronics Co., Ltd.**
**Gyeonggi-do 16677 (KR)**

(72) Inventors:
• **JOSIAM, Kaushik**
**Richardson, TX 75082 (US)**

• **TAORI, Rakesh**
**Richardson, TX 75082 (US)**

(74) Representative: **Nederlandsch Octrooibureau**
**P.O. Box 29720**
**2502 LS The Hague (NL)**

(56) References cited:
**WO-A1-2009/123856     US-A1- 2010 046 457**
**US-A1- 2010 260 114     US-A1- 2010 260 138**
**US-A1- 2011 286 402     US-A1- 2013 194 984**
**US-A1- 2013 223 299     US-A1- 2013 258 914**
**US-B2- 8 705 476**

## Description

[Technical Field]

The present disclosure relates generally to wireless networks, more specifically, to block acknowledgement in wireless networks.

[Background Art]

Some IEEE 802.11 based wireless networks support multi-user transmission. However, these IEEE 802.11 networks continue to utilize inefficient substantially sequential transmission of block acknowledgement in response to block acknowledgement request frames.
US patent document (US 2010/260114 A1) describes methods and apparatuses for communication by which a physical layer packet is generated for transmission to a plurality of nodes, or by which a physical layer packet is received by a plurality of nodes. US patent document (US 2011/286402 A1) describes methods and apparatus for scheduling one or more responses for multiple stations in a downlink multiple-user multiple-input-multiple-output network transmission. US patent document (US 2010/046457 A1) describes a method for scheduling packet transmissions in a wireless communications with stations that support spatial division multiple access transmissions. International patent document (WO 2009/123856 A1) describes methods and apparatus for reverse link acknowledgement in a wireless local area network. The method includes receiving, at a first node, a data communication over a common channel, the data communication being decodable by other nodes.

[Disclosure]

[Technical Problem]

Aspects of the present disclosure are to address at least the above-mentioned problems and/or disadvantages and to provide at least the advantages described below. Accordingly, an aspect of the present disclosure is to provide a method and apparatus for transmitting/receiving an acknowledgement efficiently in a wireless network.

[Technical Solution]

Aspects of the present disclosure are to address at least the above-mentioned problems and/or disadvantages and to provide at least the advantages described below. Accordingly, an aspect of the present disclosure is to provide a method and apparatus for transmitting/receiving an acknowledgement efficiently in a wireless network.
In accordance with an aspect of the present disclosure, a base station in a wireless communication system is provided. The base station comprises a transceiver configured to transmit and receive data over a network, and a controller configured to control allocating uplink resources for reception of a block acknowledgement for a data block transmitted to a plurality of mobile stations in a downlink, based on information associated with the plurality of mobile stations, and receiving the block acknowledgement through the allocated uplink resources.
In accordance with another aspect of the present disclosure, a base station in a wireless communication system is provided, the base station comprises a transceiver configured to transmit and receive data over a network, and a controller configured to control requesting, to a plurality of mobile stations, transmission of a block acknowledgement for a data block transmitted to the plurality of mobile stations in a downlink, and receiving the block acknowledgement from the plurality of mobile stations in response to the transmission request, wherein a message for requesting the transmission of the block acknowledgement includes allocation information of uplink resources for reception of the block acknowledgement.
In accordance with another aspect of the present disclosure, a base station in a wireless communication system is provided, the base station comprises a transceiver configured to transmit and receive data over a network, and a controller configured to control requesting, to a plurality of mobile stations, transmission of a block acknowledgement for a data block transmitted to the plurality of mobile stations in a downlink, and receiving the block acknowledgement from the plurality of mobile stations in response to the transmission request, wherein downlink resources for transmission of the data block are used as uplink resources for reception of the block acknowledgement after a predetermined time.
In accordance with another aspect of the present disclosure, a mobile station in a wireless communication system is provided, the mobile station comprises a transceiver configured to transmit and receive data over a network, and a controller configured to control determining a uplink resource, allocated to the mobile station, among uplink resources for reception of a block acknowledgement for a data block transmitted to a plurality of mobile stations in a downlink, based on information associated with the mobile station, and transmitting an acknowledgement for downlink data, received by the mobile station, through the determined uplink resource.
In accordance with another aspect of the present disclosure, a mobile station in a wireless communication system is provided, the mobile station comprises a transceiver configured to transmit and receive data over a network, and a controller configured to control receiving a request for transmission of a block acknowledgement for a data block transmitted to a plurality of mobile stations in a downlink, and transmitting an acknowledgement for downlink data in the data block, received by the mobile station, in response to the transmission request, wherein a message for requesting the transmission of the block acknowledgement includes allocation information of uplink resources for reception of the block acknowledgement.

In accordance with another aspect of the present disclosure, a mobile station in a wireless communication system is provided, the mobile station comprises a transceiver configured to transmit and receive data over a network; and a controller configured to control receiving a request for transmission of a block acknowledgement for a data block transmitted to a plurality of mobile stations in a downlink, and transmitting an acknowledgement for downlink data in the data block, received by the mobile station, in response to the transmission request, wherein a downlink resource for reception of the downlink data is used as an uplink resource for transmission of the acknowledgement after a predetermined time.

In accordance with another aspect of the present disclosure, a method for receiving an acknowledgement for downlink transmission by a base station in a wireless communication system is provided, the method comprises transmitting a data block for a plurality of mobile stations in a downlink, allocating uplink resources for reception of a block acknowledgement for the data block, based on information associated with the plurality of mobile stations, and receiving the block acknowledgement through the allocated uplink resources.

In accordance with another aspect of the present disclosure, a method for transmitting an acknowledgement for downlink transmission by a mobile station in a wireless communication system is provided, the method comprises receiving downlink data in a data block transmitted to a plurality of mobile stations in a downlink, determining a uplink resource, allocated to the mobile station, among uplink resources for reception of a block acknowledgement for the data block, based on information associated with the mobile station, and transmitting an acknowledgement for the received downlink data through the determined uplink resource.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller can be implemented in hardware or a combination of hardware and software and/or firmware. The functionality associated with any particular controller can be centralized or distributed, whether locally or remotely. The phrase "at least one of," when used with a list of items, means that different combinations of one or more of the listed items can be used, and only one item in the list may be needed. For example, "at least one of: A, B, and C" includes any of the following combinations: A, B, C, A and B, A and C, B and C, and A and B and C.

Definitions for other certain words and phrases are provided throughout this patent document. Those of ordinary skill in the art should understand that in many if not most instances, such definitions apply to prior as well as future uses of such defined words and phrases.

[Description of Drawings]

For a more complete understanding of this disclosure and its advantages, reference is now made to the following description, taken in conjunction with the accompanying drawings, in which:

FIGURE 1 illustrates an example wireless network according to this disclosure;

FIGURE 2 illustrates an example station (STA) according to this disclosure;

FIGURE 3 illustrates an example access point (AP) according to this disclosure;

FIGURE 4 illustrates example immediate and delayed block acknowledgement (ACK) procedures according to this disclosure;

FIGURE 5 illustrates a block ACK request frame format according to this disclosure;

FIGURE 6 illustrates an example block ACK control format of the block ACK request frame format of FIGURE 5;

FIGURE 7 illustrates an example starting sequence control format of the block ACK request format of FIGURE 5;

FIGURE 8 illustrates an example multiple transmission identification (TID) block ACK request frame format according to this disclosure;

FIGURE 9 illustrates an example Per TID info field of the multiple transmission identification block ACK request frame format of FIGURE 8;

FIGURE 10 illustrates an example of a basic block acknowledgement frame according to this disclosure;

FIGURE 11 illustrates a block acknowledgement control frame format of the block acknowledgement frame of FIGURE 10;

FIGURE 12 illustrates an example of a multi-traffic indicator block acknowledgement frame according to this disclosure.

FIGURE 13 illustrates an example of a transmit opportunity with very high throughput multi-user physical layer convergence procedure protocol data unit (VHT MU PPDU) with an immediate acknowledgement of the VHT MU PPDU according to this disclosure;

FIGURE 14 illustrates an example of a transmit opportunity with very high throughput multi-user physical layer convergence procedure protocol data unit (VHT MU PPDU) with no immediate acknowledgement of the VHT MU PPDU according to this disclosure;

FIGURE 15 illustrates an implicit mapping of stations to acknowledgement resources based on the order of a downlink allocation according to this disclosure;

FIGURE 16 illustrates an acknowledgement resource in a bandwidth made up of NSC data subcarriers and T OFDM symbols according to this disclosure;

FIGURE 17 illustrates acknowledgement multiplexing using uplink code division multiplexing for stations multiplexed using downlink (DL) multi-user (MU) multiple inputs and multiple outputs (MIMO) according to this disclosure;

FIGURE 18 illustrates acknowledgement resources for stations as a subset of the resources starting from the index of the downlink allocation containing the stationsBBB data according to this disclosure;

FIGURE 19 illustrates orthogonal frequency-division multiple access (OFDMA) of block acknowledgment request frames in the downlink followed by OFDMA response of block acknowledgements from the stations on the uplink according to this disclosure;

FIGURE 20 illustrates uplink OFDMA block acknowledgement triggered by a downlink multi-station block acknowledgement request (Multi-STA BAR) frame according to this disclosure;

FIGURE 21 illustrates a Multi-STA ID BAR format according to this disclosure;

FIGURE 22 illustrates block acknowledgement multiplexed along with uplink data when an uplink grant is indicated in the HE-SIG to follow the downlink reception according to this disclosure; and

FIGURE 23 illustrates an example of a Multiplexing Downlink ACK for UL data according to this disclosure.

[Mode for Invention]

The invention is defined by the appended claims 1-12. The embodiments that do not fall under the scope of the claims have to be interpreted as examples useful for understanding the invention.

In a first embodiment, an Access Point (AP) configured to receive uplink orthogonal frequency division multiple access based block acknowledgement response in an 802.11 based wireless network is provided.

The AP includes a transceiver configured to transmit the downlink allocation to the plurality of mobile devices, wherein an order of a plurality of mobile devices in the downlink allocation indicates respective uplink resource assignments. The AP configured to identify uplink resources as a function of the order of the plurality of mobile devices in the downlink allocation.

In a second embodiment, a mobile station (STA) configured to perform uplink orthogonal frequency division multiple access based block acknowledgement response in an 802.11 based wireless network is provided. The STA includes a receiver configured to receive a downlink frame with an allocation comprising a listing of a plurality of mobile devices. The STA also includes processing circuitry configured to identify an uplink resource allocation as a function of a location of a first mobile device within the listing of the plurality of mobile devices. The STA further includes a transmitter configured to transmit an acknowledgment (ACK) on the uplink resource allocation corresponding to the location of a first mobile device within the listing of the plurality of mobile devices.

In a third embodiment, a method for uplink orthogonal frequency division multiple access based block acknowledgement response in an 802.11 based wireless network is provided. The method includes transmitting a downlink allocation to the plurality of mobile devices, wherein an order of a plurality of mobile devices in a downlink allocation indicates respective uplink resource assignments. The method includes identifying uplink frequency resources as a function of the order of the plurality of mobile devices in the downlink allocation.

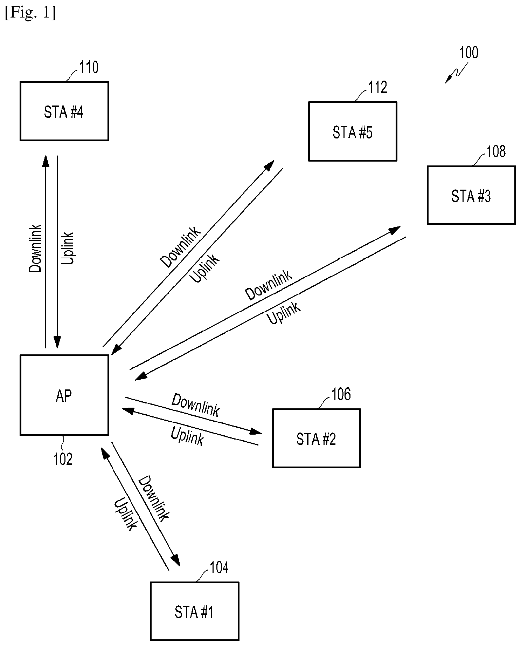

FIGURE 1 illustrates an example wireless network 100 according to this disclosure. The embodiment of the wireless network 100 shown in FIGURE 1 is for illustration only. Other embodiments could be used without departing from the scope of this disclosure.

The wireless network 100 includes an access point (AP) 102 and a plurality of stations (STAs) configured to wirelessly communicate with the AP 102. In the example illustrated in FIGURE 1, the wireless network 100 includes a first station 104, a second station 106, a third station 108, a fourth station 110, and a fifth station 112. However, the wireless network 100 can include more or fewer stations. The wireless network 100 can be configured according to one or more 802.11 based communication standards. Each station transmits uplink signals to the AP 102 and receives downlink signals from the AP 102.

Depending on the network type, other well-known terms may be used instead of AP, such as "eNodeB" or "eNB," or "base station." For the sake of convenience, the term "AP" is used in this patent document to refer to network infrastructure components that provide wireless access to remote terminals. Also, depending on the network type, other well-known terms may be used instead of STA, such as "user equipment" or "UE," "mobile station," "subscriber station," "remote terminal," "wireless terminal," or "user device." For the sake of convenience, the term "ST"A is used in this patent document to refer to remote wireless equipment that wirelessly accesses an AP, whether the UE is a mobile device (such as a mobile telephone or smartphone) or is normally considered a stationary device (such as a desktop computer or vending machine).

The AP 102 provides wireless fidelity (WiFi) access, such as 802.11 based communications, to a network, such as the Internet, for the first STA 104, the second STA 106, the third STA 108, the fourth STA 110, and the fifth STA 112. The AP 102 can be located one of: a small business (SB); an enterprise (E); in a WiFi hotspot (HS); in a first residence (R); in a second residence (R); and a mobile device (M) like a cell phone, a wireless laptop, a wireless PDA, or the like.

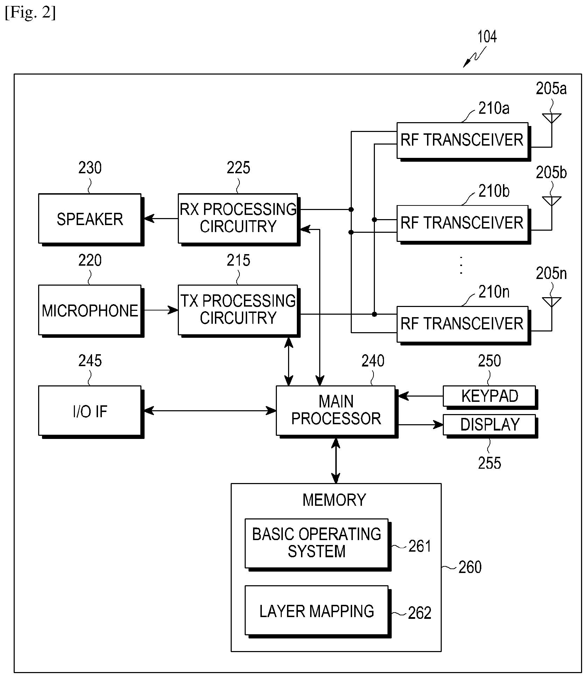

FIGURE 2 illustrates an example STA 104 according to this disclosure. The embodiment of the STA 104 illustrated in FIGURE 2 is for illustration only, and the STAs 106-112 of FIGURE 1 could have the same or similar configuration. However, STAs come in a wide variety of configurations, and FIGURE 2 does not limit the scope of this disclosure to any particular implementation of a STA.

The STA 104 includes multiple antennas 205a-205n, multiple radio frequency (RF) transceivers 210a-210n, transmit (TX) processing circuitry 215, a microphone 220, and receive (RX) processing circuitry 225. The TX processing circuitry 215 and RX processing circuitry 225 are respectively coupled to each of the RF transceivers 210a-210n, for example, coupled to RF transceiver 210a, RF transceiver 210b through to a n$^{th}$ RF transceiver 210n, which are coupled respectively to antenna 205a, antenna 205b and an n$^{th}$ antenna 205n. In certain embodiments, the STA 104 includes a single antenna 205a and a single RF transceiver 210a. The STA 104 also includes a speaker 230, a main processor 240, an input/output (I/O) interface (IF) 245, a keypad 250, a display 255, and a memory 260. The memory 260 includes a basic operating system (OS) program 261 and one or more applications 262.

The RF transceivers 210a-210n receive, from respective antennas 205a-205n, an incoming RF signal transmitted by an AP 102 of the network 100. The RF transceivers 210a-210n down-convert the incoming RF signal to generate an intermediate frequency (IF) or baseband signal. The IF or baseband signal is sent to the RX processing circuitry 225, which generates a processed baseband signal by filtering, decoding, and/or digitizing the baseband or IF signal. The RX processing circuitry 225 transmits the processed baseband signal to the speaker 230 (such as for voice data) or to the main processor 240 for further processing (such as for web browsing data).

The TX processing circuitry 215 receives analog or digital voice data from the microphone 220 or other outgoing baseband data (such as web data, e-mail, or interactive video game data) from the main processor 240. The TX processing circuitry 215 encodes, multiplexes, and/or digitizes the outgoing baseband data to generate a processed baseband or IF signal. The RF transceivers 210a-210n receive the outgoing processed baseband or IF signal from the TX processing circuitry 215 and up-converts the baseband or IF signal to an RF signal that is transmitted via one or more of the antennas 205a-205n.

The main processor 240 can include one or more processors or other processing devices and execute the basic OS program 261 stored in the memory 260 in order to control the overall operation of the STA 104. For example, the main processor 240 could control the reception of forward channel signals and the transmission of reverse channel signals by the RF transceivers 210a-210n, the RX processing circuitry 225, and the TX processing circuitry 215 in accordance with well-known principles. In some embodiments, the main processor 240 includes at least one microprocessor or microcontroller.

The main processor 240 is also capable of executing other processes and programs resident in the memory 260, such as operations for the request and transmission of block ACKs in a WiFi system, such as a IEEE 802.11 network. The main processor 240 can move data into or out of the memory 260 as required by an executing process. In some embodiments, the main processor 240 is configured to execute the applications 262 based on the basic OS program 261 or in response to signals received from AP 102 or an operator. The main processor 240 is also coupled to the I/O interface 245, which provides the STA 104 with the ability to connect to other devices such as laptop computers and handheld computers. The I/O interface 245 is the communication path between these accessories and the main controller 240.

The main processor 240 is also coupled to the keypad 250 and the display 255. The operator of the STA 104 can use the keypad 250 to enter data into the STA 104. The display 255 may be a liquid crystal display or other display capable of rendering text and/or at least limited graphics, such as from web sites.

The memory 260 is coupled to the main processor 240. Part of the memory 260 could include a random access memory (RAM), and another part of the memory 260 could include a Flash memory or other read-only memory (ROM).

Although FIGURE 2 illustrates one example of STA 104, various changes may be made to FIGURE 2. For example, various components in FIGURE 2 could be combined, further subdivided, or omitted and additional components could be added according to particular needs. As a particular example, the main processor 240 could be divided into multiple processors, such as one or more central processing units (CPUs) and one or more graphics processing units (GPUs). Also, while FIGURE 2 illustrates the STA 104 configured as a mobile telephone or smartphone, STAs could be configured to operate as other types of mobile or stationary devices.

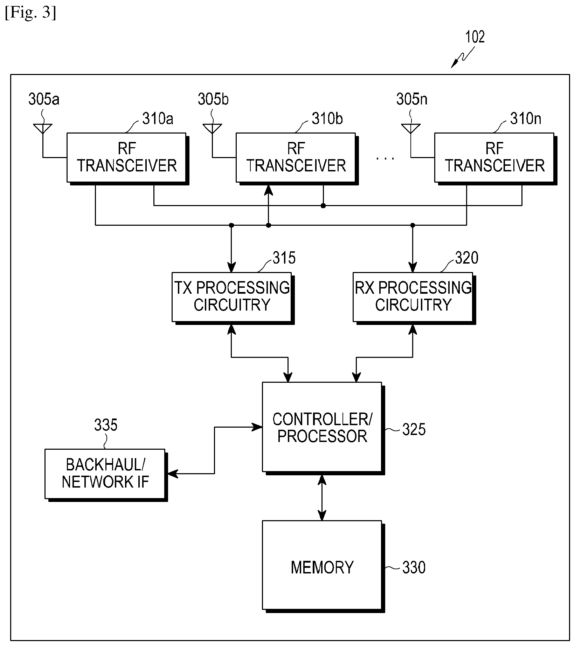

FIGURE 3 illustrates an example AP according to this disclosure. The embodiment of the AP 102 shown in FIGURE 3 is for illustration only, and other APs in embodiments of the present disclosure could have the same or similar configuration. However, APs come in a wide variety of configurations, and FIGURE 3 does not limit the scope of this disclosure to any particular implementation of an AP.

The AP 102 includes multiple antennas 305a-305n, multiple RF transceivers 310a-310n, transmit (TX) processing circuitry 315, and receive (RX) processing circuitry 320. The TX processing circuitry 315 and RX processing circuitry 320 are respectively coupled to each of the RF transceivers 310a-310n, for example, coupled to RF transceiver 310a, RF transceiver 310b through to a $n^{th}$ RF transceiver 310n, which are coupled respectively to antenna 305a, antenna 305b and an $n^{th}$ antenna 305n. In certain embodiments, the AP 102 includes a single antenna 305a and a single RF transceiver 310a. The AP 102 also includes a controller/processor 325, a memory 330, and a backhaul or network interface 335.

The RF transceivers 310a-310n receive, from the antennas 305a-305n, incoming RF signals, such as signals transmitted by STAs or other APs. The RF transceivers 310a-310n down-convert the incoming RF signals to generate IF or baseband signals. The IF or baseband signals are sent to the RX processing circuitry 320, which generates processed baseband signals by filtering, decoding, and/or digitizing the baseband or IF signals. The RX processing circuitry 320 transmits the processed baseband signals to the controller/ processor 325 for further processing.

The TX processing circuitry 315 receives analog or digital data (such as voice data, web data, e-mail, or interactive video game data) from the controller/processor 325. The TX processing circuitry 315 encodes, multiplexes, and/or digitizes the outgoing baseband data to generate processed baseband or IF signals. The RF transceivers 310a-310n receive the outgoing processed baseband or IF signals from the TX processing circuitry 315 and up-converts the baseband or IF signals to RF signals that are transmitted via the antennas 305a-305n.

The controller/processor 325 can include one or more processors or other processing devices that control the overall operation of the AP 102. For example, the controller/processor 325 could control the reception of forward channel signals and the transmission of reverse channel signals by the RF transceivers 310a-310n, the RX processing circuitry 320, and the TX processing circuitry 315 in accordance with well-known principles. The controller/processor 325 could support additional functions as well, such as more advanced wireless communication functions. Any of a wide variety of other functions could be supported in the AP 102 by the controller/processor 325. In some embodiments, the controller/ processor 325 includes at least one microprocessor or microcontroller.

The controller/processor 325 is also capable of executing programs and other processes resident in the memory 330, such as a basic OS. The controller/processor 325 can move data into or out of the memory 330 as required by an executing process.

The controller/processor 325 is also coupled to the backhaul or network interface 335. The backhaul or network interface 335 allows the AP 102 to communicate with other devices or systems over a backhaul connection or over a network. The interface 335 could support communications over any suitable wired or wireless connection(s). For example, when the AP 102 is implemented as part of a cellular communication system (such as one supporting 5G, LTE, or LTE-A), the interface 335 could allow the AP 102 to communicate with eNBs over a wired or wireless backhaul connection. When the AP 102 is implemented as an access point, the interface 335 could allow the AP 102 to communicate over a wired or wireless local area network or over a wired or wireless connection to a larger network (such as the Internet). The interface 335 includes any suitable structure supporting communications over a wired or wireless connection, such as an Ethernet or RF transceiver.

The memory 330 is coupled to the controller/processor 325. Part of the memory 330 could include a RAM, and another part of the memory 330 could include a Flash memory or other ROM.

As described in more detail below, the transmit and receive paths of the AP 102 (implemented using the RF transceivers 310a-310n, TX processing circuitry 315, and/or RX processing circuitry 320) support receiving a request and a transmission for block acknowledgements and block negative acknowledgments. The transmit and receive paths of the AP 102 are configured to support the efficient communication and reception of IEEE 802.11 signals, including block ACKs and block NACKs.

Although FIGURE 3 illustrates one example of an AP 102, various changes may be made to FIGURE 3. For example, the AP 102 could include any number of each component shown in FIGURE 3. As a particular example, AP 102 could include a number of interfaces 335, and the controller/processor 325 could support routing functions to route data between different network addresses. As another particular example, while shown as including a single instance of TX processing circuitry 315 and a single instance of RX processing circuitry 320, the AP 102 could include multiple instances of each (such as one per RF transceiver).

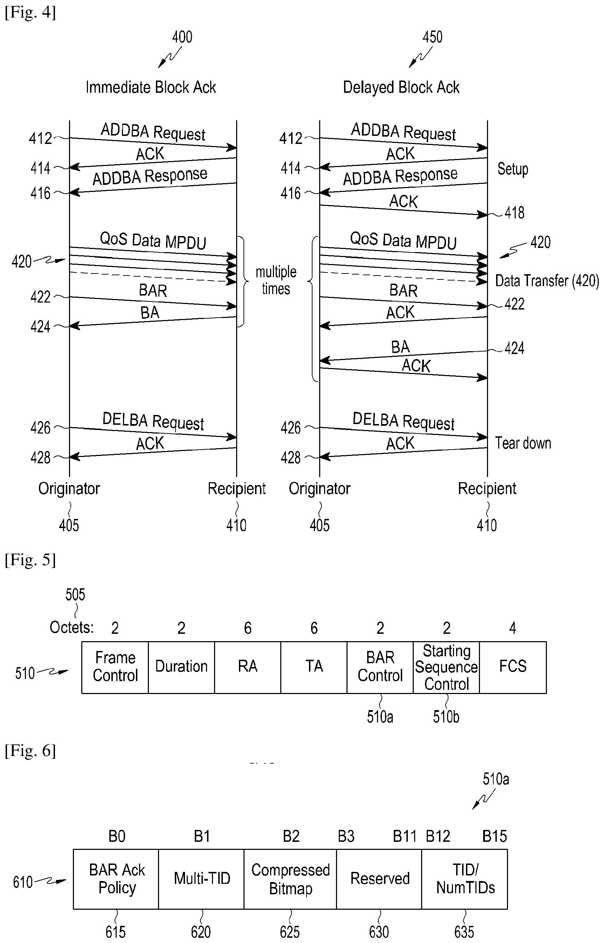

FIGURE 4 illustrates an immediate block ACK procedure 400 and a delayed block ACK procedure 450 according to this disclosure. While the flow chart depicts a series of sequential signals, unless explicitly stated, no inference should be drawn from that sequence regarding specific order of performance, performance of signals or portions thereof serially rather than concurrently or in an overlapping manner, or performance of the serials depicted exclusively without the occurrence of intervening or intermediate signals. The process depicted in the example depicted is implemented by processing circuitry in, for example, an AP or a STA.

In certain embodiments in which the wireless network 100 is configured according to an 802.11 based communication standard, block acknowledgement (BA) mechanisms enable a transfer of a block of data frames that are acknowledged with a single BA frame instead of requiring an acknowledgement (ACK) frame for each of the individual ACK frames. In some cases, an immediate block ACK and a delayed block ACK are enhanced and referred to as an enhanced immediate block ACK and an enhanced delayed block ACK, respectively. In some wireless networks, all variations of block ACKs are supported by receivers. Immediate block ACKs and delayed block ACKs differ in the handling of a block ACK request (BAR) and block ACK frames during a data transfer phase. With the immediate block ACK, the BAR solicits an immediate BA response while, with delayed block ACK, the BAR frame is itself acknowledged with an ACK and the BA is returned in a separate channel access.

Stations indicate their ability to support block ACK by setting the immediate block ACK 400 or delayed block ACK 450 capability bits, or both, in a capability information field in their beacon, an association request, a re-association request, and response frames. If a station advertises that it supports one or both types of block ACKs, then a peer station establishes a compatible block ACK session for a particular traffic class with the requesting station. The block ACK session is initiated by an originator 405, such as STA 104, sending an add block ACK (ADDBA) request frame 412. In response to a correctly received ADDBA request, a responder, such as AP 102, sends an ACK 414. After further processing, the responder send the ADDBA response frame 416 to which the originator responds with an ACK 418 if correctly received. The ADDBA request/response frame exchange set the context for the BA exchange, such as by setting block ACK policy, traffic identification (TID), buffer size, whether aggregated media access control (MAC) service data unit (A-MSDU) is supported, block ACK timeout value, and start sequence number of the data frame for which the BA was set up. The responder, namely the recipient 410 AP, may reject a block ACK session from an originator by sending a delete block ACK (DELBA) frame to the initiator after acknowledging receipt 414 of the ADDBA request 412.

During the data transfer phase 420, the originator 405 transmits a block of quality of service (QoS) data frames either as a burst, separated by a short interframe space (SIFS) or a reduced interframe space (RIFS), or as part of an A-MPDU. Each QoS data frame in the block has its ACK Policy set to BA. The data block can be wholly contained within a single transmission opportunity (TXOP) or it may straddle multiple TXOPs. The data block and TXOP are not coupled. After transferring the data block, the originator 405 sends a Block ACK Request (BAR) frame 422. The BAR frame 422 includes a starting sequence number (SSN), which is the sequence number of the oldest MAC service data unit (MSDU) in the block for which acknowledgement is needed. Upon receiving the BAR frame 422, the recipient 410 performs two functions. First, the recipient 410 prepares a BA response 424 as a bitmap where the first bit represents the MAC protocol data unit (MPDU) with the same sequence number as the starting sequence number from the BAR frame 422 and subsequent bits indicate successive sequence numbers. The BA response 424 bitmap thus forms an array indexed by sequence number with the starting sequence number as the starting reference. Second, the recipient 410 examines a reorder buffer of the recipient for MPDUs with sequence numbers that precede the starting sequence number value. MPDUs with sequence numbers that precede the starting sequence number value are either reassembled into complete MSDUs and forwarded to higher layers or the MPDUs are discarded if complete MSDUs cannot be created.

When the originator 405 has no additional data to send and the final block ACK exchange has completed, the originator 405 disables the block ACK session by sending a DELBA frame 426 to the recipient 410. The recipient 410 sends an ACK 428 in response to the DELBA frame 426 and releases any resources allocated for the block ACK session.

In some wireless network configurations, the BA frame is defined with a 1024 bit bitmap to support 64 MSDUs, each of which can be fragmented with up to 16 fragments. In other wireless network configurations that support higher rates, such as a wireless network based on an 802.11n communication standard, a compressed BA variant that eliminates the 16 bits per MSDU for fragmentation is utilized resulting in a 64 bit bitmap (8 octets). The compressed BA variant with the 64 bit bitmap reduces both on-air overhead and memory requirements in the recipient.

A block ACK mechanism defined in the 802.11e amendment is referred to as full state block ACK to distinguish the block ACK mechanism from a partial state block ACK introduced in 802.11n amendment. Under full state block ACK, the recipient maintains an ACK state for each block ACK session and records the ACK state of up to 64 MSDUs. Further, a window is defined by a beginning sequence number, WinStart, an ending sequence number, WinEnd, and an extent, WinSize. In the establishment of a block ACK session, the window is initialized to the starting sequence number provided in the ADDBA request 412. When QoS data arrives, if the sequence number falls within the space represented by the window, then the recipient 410 updates the appropriate sequence number within the window with the status of the QoS data. If the sequence number falls outside the window, then the recipient will shift the window to the right until the shifted window includes the new sequence number. Upon receiving a BAR 422, the window contents from the sequence number indicated in the BAR 422 is returned in the BA frame 424.

Some block ACK mechanisms require the window to persist for the duration of the block ACK session, which burdens the recipient implementation with the need to maintain state for all active block ACK sessions. In some cases, the low latency required to produce a BA in response to BAR necessitates using expensive on-chip memory. The partial state block ACK maintains state memory of the most recently active block ACK session. On-chip memory reserved for block ACK state can be reused by different block ACK sessions thus making the state memory similar to a cache. Upon receiving a QoS data frame with a sequence number (SN), the recipient 410 checks to see if the recipient 410 has a record of the block ACK window for that block ACK session where a session is identified by the transmit address (TA) and the TID. If not, the recipient 410 creates a block ACK window for that session. The correct reception of the data frame is recorded by setting a '1' in the position representing SN.

A difference between partial state and full state block ACK operations is the transient nature of the state window maintained by the recipient 410. Under partial state block ACK, the originator 405 is tasked with ensuring that the originator 405 retrieves the ACK state with high probability before another station has an opportunity to send data to the recipient and potentially erase the session's ACK state table. The originator 405 is tasked with attempting to retrieve the block ACK window state before the end of each TXOP.

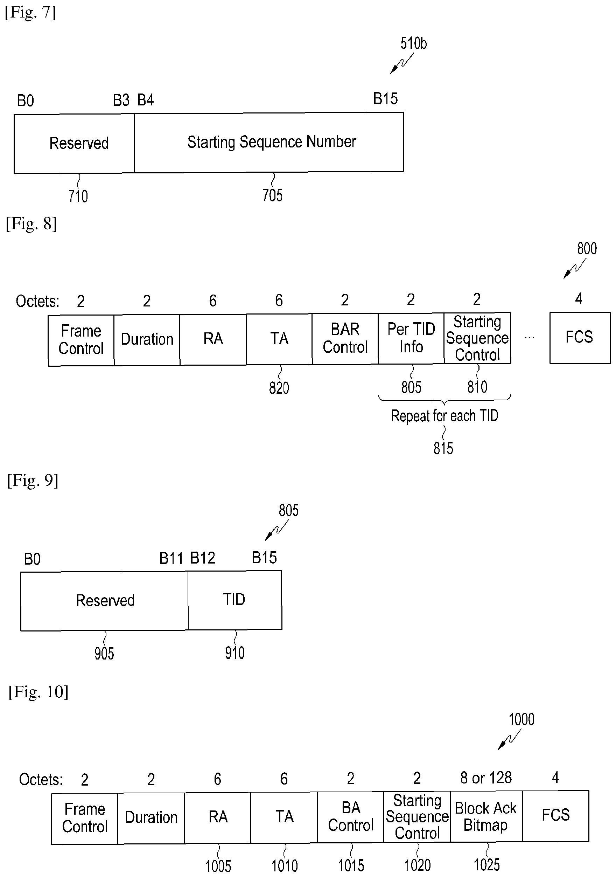

FIGURE 5 illustrates an example block ACK request format according to this disclosure. The format for the block ACK request 500 shown in FIGURE 5 is associated with IEEE 802.11n and includes 24 octets 505 with 7 fields 510. The Block ACK control format fields 510a contains two octets whose fields 610 are populated as shown in FIGURE 6. The Block ACK control format fields 510a includes a BAR ACK Policy 615 at B0, a multi-traffic indicator (Multi-TID) 620 at B1, and a Compressed Bitmap 625 at B3. In the Block ACK control format fields 510a, B3-B11 are reserved 630 while B12-15 include a traffic indicator (TID)/ number of TIDs (NumTIDs) 635. FIGURE 7 illustrates the starting sequence control field 510b that contains the starting sequence number 705 in the two octets that follow the block ACK Control format fields 510a. As shown in the example shown in FIGURE 7, B0-B3 are reserved 710 while the starting sequence number 705 is included in B4-B15.

FIGURE 8 illustrates an example multi-traffic indicator (Multi-TID) BAR according to this disclosure. The example of the Multi-TID BAR 800 shown in FIGURE 8 is for illustration only.

The Multi-TID BAR 800 is a variant of the BAR frame and is used under power save multi-poll (PSMP) scheduling. The Multi-TID BAR 800 frame is identified by as being a control frame of subtype BAR and having the Multi-TID 620 and Compressed bitmap 625 fields set in the BAR control field. The TID/NumTIDs 635 field in the BAR Control field is set to indicate the number of TIDs for which this Multi-TID BAR 800 applies. A per TID Info 805 and starting sequence control field 810 are provided for each TID 815.

FIGURE 9 illustrates an example Per TID info field of the multiple transmission identification block ACK request frame format of FIGURE 8. The example of the Per TID info field 805 shown in FIGURE 9 is for illustration only. As shown in the example shown in FIGURE 9, B0-B11 are reserved 905 while the TID 910 is included in B12-B15.

FIGURE 10 illustrates an example format of a basic block ACK or BA frame according to this disclosure. The example of the basic block ACK or BA frame 1000 shown in FIGURE 10 is for illustration only.

The receiver address (RA) field 1005 is set to the address of the originator 405 taken from the transmitter address (TA) address of the BAR or QoS data frame that solicited the BA. The TA field 1010 is the address of the recipient 410. The BA control field 1015 indicates if a normal acknowledgement is required for the BA frame. The starting sequence number of the first MSDU for which this BA is sent is indicated in the starting sequence control 1020. If the BA was solicited by a BAR frame, then the starting sequence number matches that in the BAR frame.

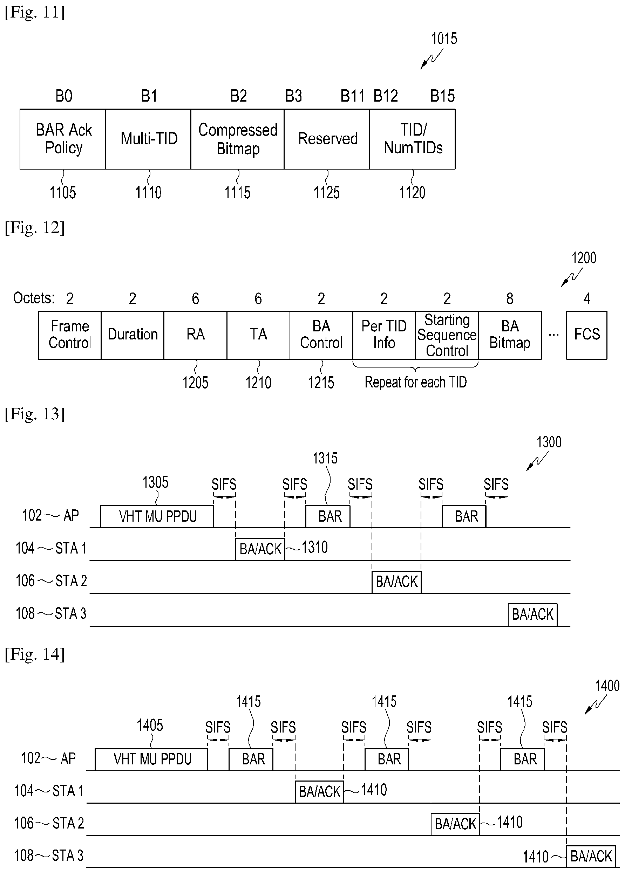

FIGURE 11 illustrates a block acknowledgement control frame format of the block acknowledgement frame of FIGURE 10. The example of the BA control frame 1015 shown in FIGURE 11 is for illustration only.

The BA control field 1015 indicates the BA ACK Policy 1105, which indicates if a normal acknowledgement is required for the BA frame. When the BA ACK Policy 1105 is set to 1, the BA will not solicit an ACK response. The Multi-TID 1110 is set to 0 in the basic BA frame. The compressed bitmap field 1115 is set to 1 to indicate that the BA frame contains the compressed 8 octet block ACK bitmap 1025. The TID/NumTIDs field 1120 indicates the TID for which this BA frame applies in the case of a basic BA frame. As shown in the example shown in FIGURE 11, B3-B11 are reserved 1125.

FIGURE 12 illustrates an example Multi-TID BA frame according to this disclosure. The example of the Multi-TID BA 1200 shown in FIGURE 12 is for illustration only.

The Multi-TID BA 1200 frame is a variant of the BA used under PSMP. The RA field 1205 is set to the address of the originator 405 taken from the TA 820 address of the multi-TID BAR 800 or QoS Data frames that solicited the Multi-TID BA. The TA 1210 contains the address of the recipient station sending the Multi-TID BA 1200. The BA Control 1215 is two octets and carries the BA Ack Policy, Mulit-TID, Compressed Bitmap, and NumTIDs indication.

The acknowledgement procedure performed by a STA, such as STA 104, that receives MPDUs that were transmitted within a very high throughput (VHT) multi-user (MU) physical layer convergence procedure (PLCP) protocol data unit (PDU), also called a VHT MU PPDU, is the same as the acknowledgement procedure for MPDUs that were not transmitted within a VHT MU PPDU. Responses to A-MPDUs within a VHT MU PPDU that are not immediate responses to the VHT MU PPDU are transmitted in response to explicit BAR frames by the AP 102.

FIGURE 13 illustrates an example VHT MU PPDU frame exchange sequence according to this disclosure. The example of the VHT MU PPDU frame exchange sequence 1300 shown in FIGURE 13 is for illustration only.

In the example shown in FIGURE 13, all MPDUs transmitted within a VHT MU PPDU 1305 are contained within A-MPDUs. Acknowledgement rules prevent an immediate response to more than one A-MPDU. In this example, the first STA 104 transmits a BA/ACK 1310 even though the AP 102 has not yet transmitted a BAR 1315 after the AP 102 transmitted the VHT MU PPDU 1305.

FIGURE 14 illustrates another example VHT MU PPDU frame exchange sequence according to this disclosure. The example of the VHT MU PPDU frame exchange sequence 1400 shown in FIGURE 14 is for illustration only.

In the example shown in FIGURE 14, all MPDUs transmitted within a VHT MU PPDU 1405 are contained within A-MPDUs. Acknowledgment rules prevent an immediate response to more than one A-MPDU. In this example, the AP 102 transmits a BAR 1415 prior to each of the BAs/ACKs 1410 being transmitted by the stations 104-108. The frame exchanges shown in FIGURES 13 and 14 utilize sequential transmission of ACK based on BAR.

In some wireless networks, such as a wireless network based on IEEE 802.11ax, also known as High Efficiency (HE) WLAN, orthogonal frequency-division multiple access (OFDMA) multi-user (MU) multiple-input and multiple-output (MIMO) are being considered for use to allow multiplexing stations or users to accommodate many more than four users, or a combination thereof. In some cases, it can be advantageous to utilize ACK transmission concepts that accommodate OFDMA/MU-MIMO with arbitrary number of stations and/or users. Considering the partial state operation of the ACK mechanisms described above, recovering the block acknowledgements as quickly as possible before the MPDU lifetime expires can be advantageous.

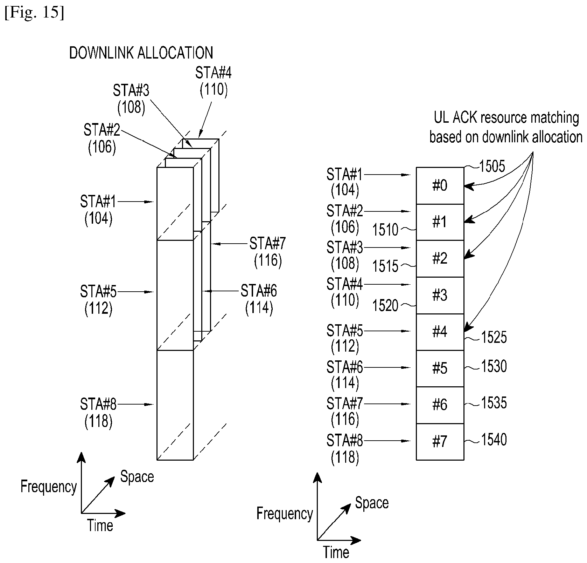

FIGURE 15 illustrates an example implicit mapping of resources based on downlink allocation according to this disclosure. The implicit mapping 1500 of resources based on downlink allocation shown in FIGURE 15 is for illustration only. Other implicit mapping of resources based on downlink allocation procedures could be used without departing from the scope of this disclosure.

In certain embodiments, the acknowledgements for the downlink multi-user packets follow an implicit acknowledgement rule wherein the acknowledgements are transmitted from the STAs that are recipients of the downlink multi-user packets according to a format and without an acknowledgement request from the AP 102. The downlink multi-user multiplexing includes packets that are multiplexed using either downlink (DL) OFDMA and/or DL MU-MIMO. The resource that the STA 104-110 use for transmitting the uplink acknowledgement follows either an implicit mapping rule based on the resource allocation for the downlink packet or is explicitly signaled in the downlink multi-user packet or separately using a BAR. That is, in certain embodiments, the AP indicates uplink resources as a function of an order of STAs in a downlink allocation. The STA is able to determine its corresponding uplink resources based on its respective position in a listing of the STAs in the downlink allocation. The AP also identifies the uplink resources as a function of the order of a plurality of mobile devices in the downlink allocation.

The order in which downlink resource allocations are listed in the high efficiency signal (HE-SIG) field along with the STA identifiers also indexes the resources of the uplink ACK. A STA, such as STA 104 that has resources that are first indicated is implicitly assigned the first uplink ACK resource 1505; the STA 106 assigned a set of resources indicated second will be assigned the second uplink ACK resources 1510; and so forth. For example, STA 108 is assigned the third uplink ACK resources 1515; STA 110 is assigned the fourth uplink ACK resources 1520; STA 112 is assigned the fifth uplink ACK resources 1525; STA 114 is assigned the sixth uplink ACK resources 1530; STA 116 is assigned the seventh uplink ACK resources 1535; and STA 118 is assigned the eighth uplink ACK resources 1540. The indexing of the STAs, or the order in which the STAs are addressed, is the order in which the uplink ACK resources are assigned. The STA, such as STA 104, indicated first in the downlink HE-SIG will be allocated the first uplink ACK resource 1505. The STAs in downlink allocation can be allocated resources both in frequency and spatial domain. However, the STAs are mapped to an ACK resource in the frequency domain.

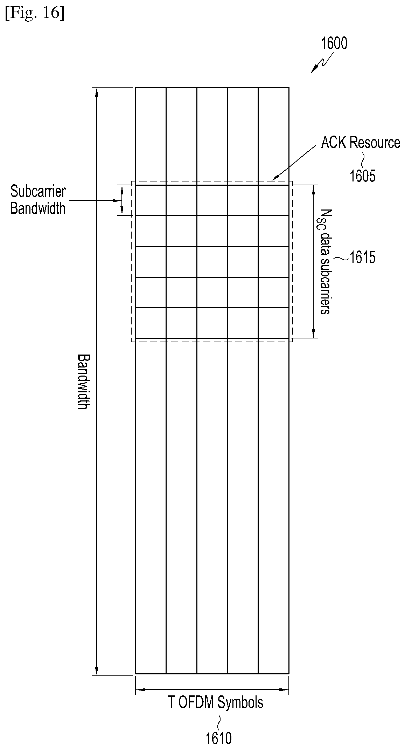

FIGURE 16 illustrates an example of an ACK resource definition according to this disclosure. The embodiment of the implicit mapping of resources based on downlink allocation 1600 shown in FIGURE 16 is for illustration only. Other embodiments could be used without departing from the scope of this disclosure.

The ACK resource 1605 is a set of subcarriers spanning a set of OFDM symbols 1610 containing the block acknowledgement for the MPDUs received in the OFDMA/MU-MIMO packet. The number of OFDM symbols times the number of frequency resources indicate the amount of data tones that can be placed in the ACK resource. The number of OFDM symbols T 1610 times the number of data subcarriers $N_{sc}$ 1615 together have $N_{ACK}$ number of acknowledgement tones.

In certain embodiments, the number of tones required for the ACK resource $N_{ACK}$ is fixed but the number of subcarriers and the number of OFDM symbols containing the block acknowledgement for the MPDUs received in the OFDMA/MU-MIMO packet is variable and dependent upon the number of downlink allocations signaled. Fewer downlink allocations will have an ACK resource that have a lot more subcarriers than OFDM symbols while more downlink allocations will result in ACK resources that have smaller frequency resources and more OFDM symbols. The number of subcarriers per ACK resource is variable based on the number of users scheduled in the downlink allocation. The total number of data subcarriers can be equitably divided among the STAs scheduled in the downlink allocation. Based on the number of subcarriers allocated to an UL ACK resource, the number of OFDM symbols in the uplink ACK resource is determined such that the total amount of tones necessary to transmit an ACK packet is correctly dimensioned. $N_{STA}$ is the number of STAs that are allocated resources in the downlink transmission. If the bandwidth signaled has $N_{datasc}$ subcarriers, then the number of subcarriers for the ACK resource is according to Equation 1:

$$N_{SC} = \max \left[ \left\lceil \frac{N_{datasc}}{N_{STA}} \right\rceil, N_{SC,min} \right]$$

$$...(1)$$

Where $N_{SC,min}$ is the specified minimum number of subcarriers that an ACK resource must have. If $N_{ACK}$ tones are necessary to transmit an ACK packet, then the number of OFDM symbols T that makes up the ACK resource is computed as according to Equation 2:

$$T = \left\lceil \frac{N_{ACK}}{N_{SC}} \right\rceil$$

$$...(2)$$

If there are more users than can be multiplexed in the uplink ACK resource, then the STAs corresponding to the first $N_{STA\prime} = \left\lceil \frac{N_{datasc}}{N_{SC,min}} \right\rceil$ use the ACK

resources and users corresponding to the remaining $N_{STA}$-$N_{STA\prime}$ allocations transmit their acknowledgements in response to an block ack request (BAR) from the AP or during an uplink allocation for those STAs within the lifetime of the MPDUs received.

In certain embodiments, the ACK packet transmitted on a resource from the STA in OFDM symbols is transmitted using a large cyclic prefix such that all users data is received within the cyclic prefix interval at the AP and ICI can be avoided. In certain embodiments, if the number of cyclic prefix choices is known, then the cyclic prefix that the ACK packet uses to transmit data is signaled along with the downlink data allocation. In certain embodiments, if the number of cyclic prefix choices is known, then the cyclic prefix of the ACK packet is fixed to the largest cyclic prefix duration.

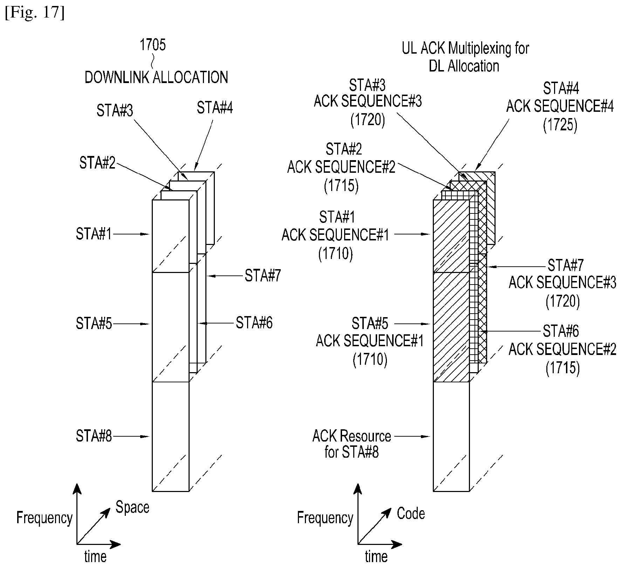

FIGURE 17 illustrates the contents of an example ACK resource according to this disclosure. The embodiment of the ACK resource contents shown in FIGURE 17 is for illustration only. Other embodiments could be used without departing from the scope of this disclosure.

In certain embodiments, the acknowledgement of the data in a MAC packet containing the sequence number of the MPDU received in the downlink data 1705 and a bitmap containing the acknowledgements where the first bit represents the MPDU with the same sequence number as the starting sequence number of the downlink allocation for that STA and subsequent bits indicate successive sequence numbers up to 16 sequence numbers. If the first bits is set to '1', then it is interpreted as an acknowledgement. A '0' in the first bit position indicates a no-acknowledgement. If fewer than 16 MPDUs were transmitted in the downlink grant, then only those MPDUs that were received are acknowledged and the rest of the positions in the bitmap will be set to 0. The bitmap is placed in an ACK resource assigned to the STA and transmitted to the AP.

In certain embodiments, the acknowledgement of the data MPDUs received is indicated using a pseudo-random sequence of length N that is transmitted to indicate an acknowledgement. No transmission of the sequence indicates that no acknowledgement of the received packets has occurred. The sequence is a pseudo-dorandom sequence chosen from a set of sequences and hashed with the station identification (STAID) to ensure that the identification of the sequence is unambiguous at the AP 102. The sequence is placed in an ACK resource assigned to the STA and transmitted to the AP 102. Alternately, an STA uses an assigned sequence of length N.

In certain embodiments, the users multiplexed using MU-MIMO in an MU-MIMO/OFDMA packet can use a sequence based block ACK to indicate whether all MPDUs transmitted for a user multiplexed using MU-MIMO have been received correctly or not. The user in position 1 of the MU-MIMO stream will choose sequence #1 1710, the user in position 2 of the MU-MIMO stream will choose sequence #2 1715, the user in position 3 of the MU-MIMO stream will choose sequence #3 1720, and so forth. The chosen sequence will be placed in an ACK resource and transmitted to the AP. All users whose data is MU-MIMO multiplexed will be transmitted using the same ACK resource, which will be received using code division multiplexing at the AP.

In certain embodiments, one of more of the STAs transmits a partial ACK. The acknowledgement of the data MPDUs received is indicated by choosing from a set of sequences, where each sequence indicates an acknowledgement for certain set amount (or percentage) of contiguous MPDUs received correctly. For example, when 4 sequences are to be used: Sequence #1 1710 indicates all MPDUs were received correctly while Sequence #2 1715 indicates the first 25% of MPDUs were received correctly, Sequence #3 1720 indicates the first 50% of MPDUs were received correctly, and Sequence #4 1725 indicates the first 75% of MPDUs were received correctly. Each of the chosen sequences are orthogonal to each other, are made of length N, and are hashed with the STAID to ensure unambiguous identification of the STA and the acknowledgement at the AP. The sequence chosen and hashed with the STAID is placed in an ACK resource and transmitted to the AP.

In certain embodiments, block ACK transmitted by the STAs can indicate additional information such as the transmit buffer status, channel quality information (CQI), and interference level. That is, the additional information can be piggybacked on a transmitted block ACK. The transmit buffer status that indicates the packets and traffic type of the packets, among other things, is useful to the AP in scheduling the STA for UL OFDMA transmissions. The CQI level can be used to indicate the current observed signal to interference plus noise ratio (SINR) in a subset of frequency segments, which can in turn be mapped to a supported modulation and coding set (MCS) level on different frequency segments in the transmission bandwidth. The interference level measurement on a subset of frequency segments in the transmission bandwidth can also be indicated. The interference level could also be used to indicate an updated or a dynamic clear channel assessment (CCA) adjustment in the neighborhood of the STA.

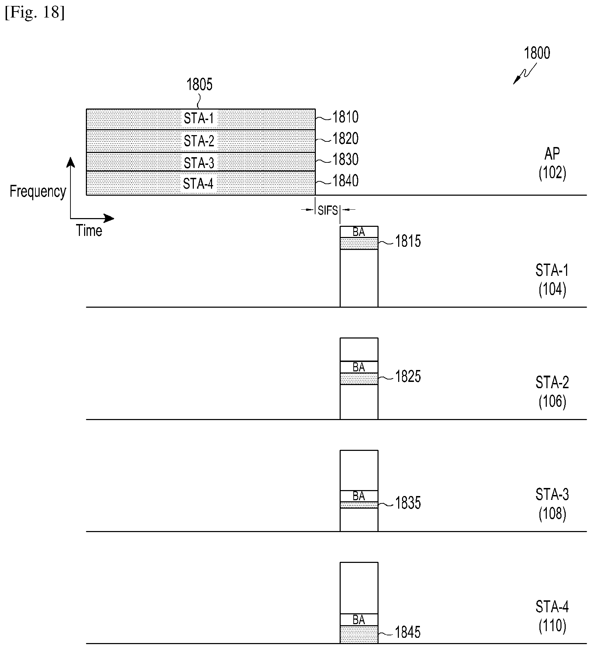

FIGURE 18 illustrates an example of OFDMA multiplexing of ACK using a subset of DL allocation according to this disclosure. The embodiment of the OFDMA multiplexing of ACK 1800 shown in FIGURE 18 is for illustration only. Other embodiments could be used without departing from the scope of this disclosure.

In certain embodiments, the location of an STA's UL resource allocation for the acknowledgements of the downlink data are derived from the resources occupied by the STA's data in the downlink multi-user packet 1805. For example, the start of the STA's DL resource index is mapped to the start of the resource where the block ACK packet from the STA is to be placed. That is, a position of the resource index 1810 for the first STA 104 indicates a position of the block ACK packet 1815 from the first STA 104. A position of the resource index 1820 for the second STA 106 indicates a position of the block ACK packet 1825 from the second STA 106. A position of the resource index 1830 for the third STA 108 indicates a position of the block ACK packet 1835 from the third STA 108. A position of the resource index 1840 for the fourth STA 110 indicates a position of the block ACK packet 1845 from the fourth STA 110. In alternative embodiments, the location of the start of the Block ACK placement location may be a location unique from the end, or the center, or a predefined location. The block acknowledgement packet from the STA is placed starting from the identified resource index (as mentioned above) and transmitted to the AP a SIFS duration after receiving the downlink data. The size of the ACK resource that carries the block ACK packet is fixed for all users. Alternately, the block ACK packet can be placed in the resource occupied by the downlink packet.

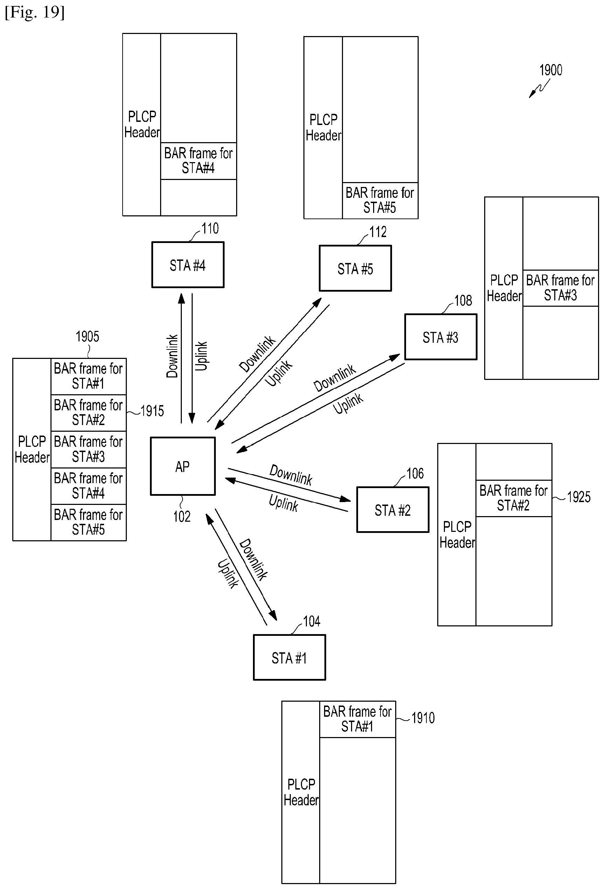

FIGURE 19 illustrates an example of an OFDMA block ACK request according to this disclosure. The embodiment of the OFDMA block ACK request 1900 shown in FIGURE 19 is for illustration only. Other embodiments could be used without departing from the scope of this disclosure.

In certain embodiments, multiple Block ACK request (BAR) frames can be transmitted to multiple STAs as a DL OFDMA packet where each BAR frame is transmitted on different sets of subcarriers. The block ACK request frames are transmitted as data frames using a set of frequency resources in the downlink OFDMA packet. When the STA receives the OFDMA packet containing the BAR frames, the STA decodes the block ACK frame contained in the signaled resources for the STA. For example, when the first STA 104 receives the OFDMA packet 1905 containing the BAR frame, the STA 104 decodes the block ACK frame 1910 contained in the signaled resources for the STA 104; when the second STA 106 receives the OFDMA packet 1915 containing the BAR frame, the STA 106 decodes the block ACK frame 1920 contained in the signaled resources for the STA 106; and so forth. Depending upon the policy set in the block ACK frame will either transmit the block ACK in the same subcarriers occupied by the block ACK request frame in the downlink OFDMA (for immediate ACK) or transmit an ACK for the block ACK requested (in case of a delayed ACK). The block ACK request frame as shown in FIGURE 5 can be transmitted for a STA in a set of subcarriers and the block ACK frame as shown in FIGURE 10 can be transmitted in the same set of subcarriers on the uplink a SIFS duration after receiving the downlink packet.

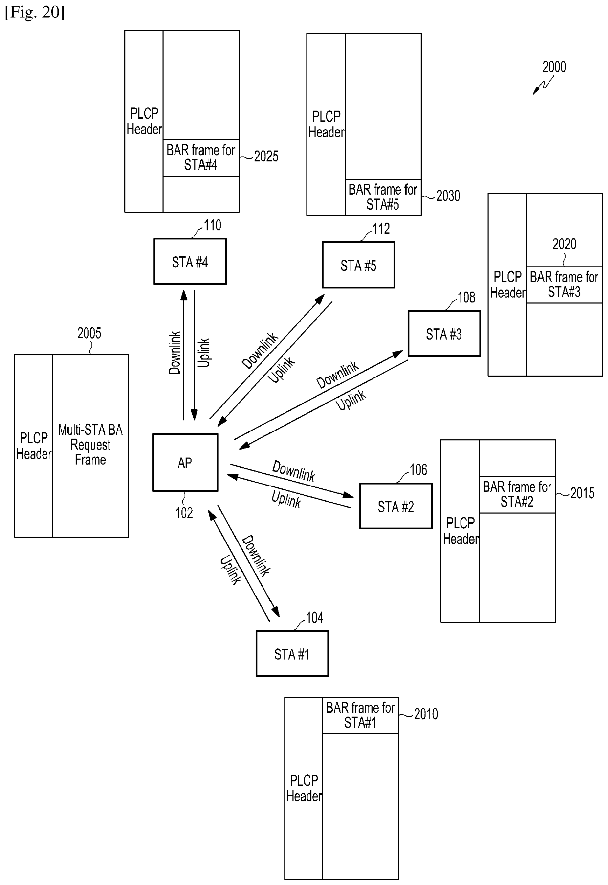

FIGURE 20 illustrates an example of a Block ACK request with explicit UL frequency resource signaling according to this disclosure. The embodiment of the Block ACK request with explicit UL frequency resource signaling 2000 shown in FIGURE 20 is for illustration only. Other embodiments could be used without departing from the scope of this disclosure.

In certain embodiments, a multi-STA block ACK request (M-STA BAR) frame 2005 can be transmitted by the AP 102. The multi-STA BAR frame explicitly signals the STAID of the STAs that have to responded to the M-STA BAR and the frequency/time resources that the respective STAs are to use to transmit the BAR. Upon receiving the multi-STA BAR 2005, the STA assembles the BA packet and transmits it in the frequency/time resources indicated in the multi-STA BAR frame. Upon receiving the multi-STA BAR 2005, the STA 104 assembles the BA packet and transmits it in the frequency/time resources 2010 indicated in the multi-STA BAR frame 2005; the STA 106 assembles the BA packet and transmits it in the frequency/time resources 2015 indicated in the multi-STA BAR frame 2005; STA 108 assembles the BA packet and transmits it in the frequency/time resources 2020 indicated in the multi-STA BAR frame 2005; STA 110 assembles the BA packet and transmits it in the frequency/time resources 2025 indicated in the multi-STA BAR frame 2005; and STA 110 assembles the BA packet and transmits it in the frequency/time resources 2030 indicated in the multi-STA BAR frame 2005.

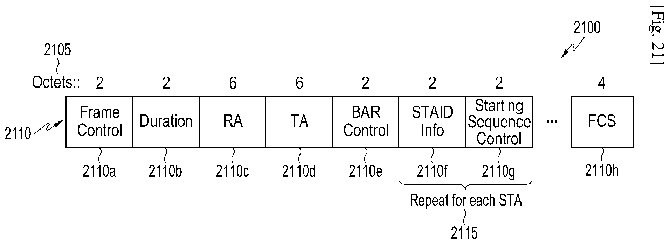

FIGURE 21 illustrates an example format for the multi-STA (M-STA) BAR according to this disclosure. The embodiment of the M-STA BAR 2100 shown in FIGURE 21 is for illustration only. Other embodiments could be used without departing from the scope of the present disclosure.

In certain embodiments, a M-STA BAR 2100 addressed to multiple STAs can be used to signal additional information requests from the STAs, such as buffer status, CQI, interference level, and any other suitable requests. Block ACKs transmitted by the STAs contains responses to the information requested by the AP 102, such as response to the request for information regarding the transmit buffer status, CQI, and interference level. The transmit buffer status that indicates the packets and traffic type of the packets, among other things, is useful to the AP 102 in scheduling the STA for UL OFDMA transmissions. The CQI level can be used to indicate the current observed SINR in a subset of frequency segments, which can in turn be mapped to a supported MCS level on different frequency segments in the transmission bandwidth. The interference level measurement on a subset of frequency segments in the transmission bandwidth can also be indicated. The interference level could also be used to indicate an updated or a dynamic CCA adjustment in the neighborhood of the STA.

The M-STA BAR 2100 includes at least twenty-six octets 2105 with at least eight fields 2110. The fields include a frame control 2110a comprising two octets, a duration 2110b comprising two octets, an RA 2110c comprising six octets, a TA 2110d comprising six octets, a BAR control 2110e comprising two octets, STAID 2110f comprising two octets, starting sequence control 2110g comprising two octets, and an FCS field 2110h comprising four octets. The STAID 2110f and starting sequence control 2110g are repeated 2115 for each STA. The RA field 2110c can be set to a broadcast address so that all STAs connected to the AP can decode it.

In certain embodiments, one or more of the STAs 104-118 process the received M-STA BAR 2100 and if their STAID 2110, namely a STAID 2105 referenced for the respective STA 104-118, is mentioned in the multi-STA BAR 2100, the STA proceeds to assemble the BA as well as the additional information requested in the BAR and transmits the BA and additional information to the AP 102. For example, STA 104 processes the receive M-STA BAR 2100 and, if a STAID 2110 referenced for STA 104 is included in the M-STA BAR 2100, STA 104 assembles the BA as well as the additional information requested in the BAR and transmits the BA and additional information to the AP 102. Some bit fields can be overloaded and combined with other flags in the header of the MAC information. In some cases, the sought information in the BAR can be transmitted without changing the size of the block ACK packet or the physical resources it occupies.

In certain embodiments, the STAs 104-118 can use the short training field (STF) and long training field (LTF) in the multi-STA block ACK to measure the channel quality on different sub-channels over the transmission bandwidth. If the STAID 2110 of the STA 104 is indicated in the multi-STA BAR 2100 that seeks channel quality information feedback, the STA 104 transmits the CQI based on the measured pilots in the STF and LTF fields. Other STAs 106-118 whose STAID are not indicated in the multi-STA BAR use the CQI transmitted from STA 104 to measure the channel and save the CQI measurements for later transmission.

In certain embodiments, if uplink MU-MIMO/OFDMA resources are granted to STAs with previously unacknowledged MPDUs in the downlink data transmission, then the uplink resources are used to piggyback block acknowledgements for the unacknowledged MPDUs. In certain embodiments, the block ACK for the downlink data can be placed in the header of the uplink PPDU and contains the sequence number of the MPDU from which the ACK is being transmitted followed by a bitmap containing the acknowledgements. The first bit represents the MPDU with the same sequence number as the starting sequence number of the downlink allocation for that STA and subsequent bits indicate successive sequence numbers up to 16 sequence numbers. An example of the header is the PLCP header for the physical layer convergence layer packet.

In certain embodiments, the block ACK for the downlink data can be placed in the extended header of the uplink MPDU for the user and contains the sequence number of the MPDU from which the ACK is being transmitted followed by a bitmap containing the acknowledgements. The first bit represents the MPDU with the same sequence number as the starting sequence number of the downlink allocation for that STA and subsequent bits indicate successive sequence numbers up to sixteen sequence numbers. In certain embodiments, the block ACK is transmitted as an MPDU in the uplink transmitted either in the beginning after the header followed by the data MPDUs or trailing the data MPDUs.

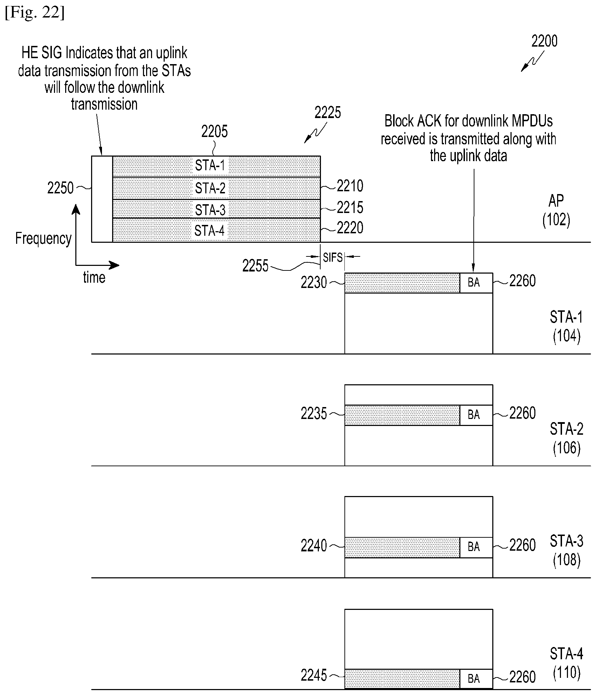

FIGURE 22 illustrates an example of a Multiplexing ACK with an immediate UL allocation following a downlink according to this disclosure. The embodiment of the Multiplexing ACK 2200 with an immediate UL allocation following a downlink shown in FIGURE 22 is for illustration only. Other embodiments could be used without departing from the scope of this disclosure.

The set of resources 2205-2220 carrying the downlink data for a STA 104-110 respectively in an OFDMA/MU-MIMO packet 2225 also indicates the set of resources 2230-2245 that are to be used to carry the uplink data from the same STA when an indication for an uplink transmission is enabled in the HE-SIG 2250. For example, a first resource 2205 carrying the downlink data for a STA 104 in the OFDMA/MU-MIMO packet 2225 from the AP 102 also indicates the resources 2230 that are to be used to carry the uplink data from the STA 104 to the AP 102 when an indication for an uplink transmission is enabled in the HE-SIG 2250. Additionally, a second resource 2210 carrying the downlink data for a STA 106 in the OFDMA/MU-MIMO packet 2225 also indicates the resources 2235 that are to be used to carry the uplink data from the STA 106; a third resource 2215 carrying the downlink data for a STA 108 in the OFDMA/MU-MIMO packet 2225 also indicates the resources 2240 that are to be used to carry the uplink data from the STA 108; and a fourth resource 2220 carrying the downlink data for a STA 110 in the OFDMA/MU-MIMO packet 2225 also indicates the resources 2245 that are to be used to carry the uplink data from the STA 110. In this case, no explicit resource indication is carried since the same set of resources assigned to the downlink data are assumed enabled for the uplink data transmission. The uplink data will transmit a SIFS duration 2255 after the end of the downlink transmission. The indication of an uplink data transmission following the downlink will be carried in the HE-SIG 2250 by setting a specific value or a combination of bits.

In certain embodiments, any block acknowledgements 2260 for the transmitted downlink data is carried along with uplink data transmitted from the STA as part of the header, extended header or as a standalone MPDU. An example of the header is the PLCP header of PPDU and an example of the extended header is the MAC header in the MPDU. An example illustrating the standalone MPDU containing the block ACK 2260 for the downlink MPDUs transmitted is shown in FIGURE 22.

In certain embodiments, a common resource grant indicates both downlink and uplink resource grants and is carried in the HE-SIG 2250 along with the downlink data. The uplink transmission from STAs starts a SIFS duration 2255 after the downlink transmission ends.

In certain embodiments, some of the STAs 104-110 in the downlink allocation can contain an uplink grant as well. In such cases, the downlink resource grant applies to uplink resources as well. The indication that a STA's data is carried in the downlink as well as the uplink is carried in the HE-SIG 2250. The uplink resource indication for the STAs that do not have an associated downlink transmission is separately indicated in the HE-SIG 2250. Signaling required to indicate if an STA has downlink only grant, an uplink only grant and a downlink + uplink grant is carried in the HE-SIG 2250. In certain embodiments, those STAs that have a downlink + uplink grant transmit the block acknowledgement along with the uplink data in a piggybacked fashion either as a separate PPDU in the uplink transmission or in the header (or the extended header) of the uplink transmission. In certain embodiments, the STAs that have a downlink only grant in a transmission that also indicates an uplink grant, wait for an explicit block acknowledgement request or an uplink data grant to transmit the acknowledgements for the unacknowledged MPDUs received so far. If the block acknowledgement is transmitted in an uplink data grant, the BA is transmitted along with the uplink data either in the header (or the extended header) of the uplink transmission or as a separate PPDU in the uplink transmission. A signaling to indicate the presence of block acknowledgements piggybacked with the uplink data is carried in the HE-SIG 2250 transmitted by the AP 102 (granting an uplink data transmission opportunity) or in the header of the MPDU indicating that it is an acknowledgement. BAs can be transmitted only if the lifetime of the MPDU has not yet expired.

In certain embodiments, when uplink data is received via UL multi-user MIMO, UL OFDMA, or OFDM from a STA, then the BA for the uplink data can be piggybacked with the downlink data when the downlink data is transmitted to the STA. The BA can be transmitted on the downlink as part of the header, part of the extended header, or as a standalone MPDU. An example of the header is the PLCP header of PPDU and an example of the extended header is the MAC header in the MPDU.

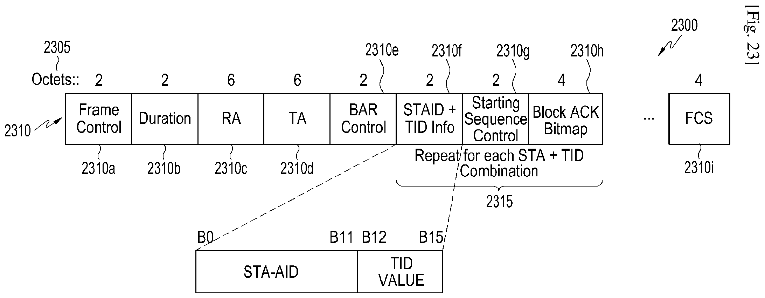

FIGURE 23 illustrates an example of a Multiplexing Downlink ACK for UL data according to this disclosure. The embodiment of the Multiplexing Downlink ACK/BA frame 2300 for UL data shown in FIGURE 23 is for illustration only. Other embodiments could be used without departing from the scope of this disclosure.

The downlink ACK/BA control frame 2300 for uplink MU data transmitted from STAs using either MU-MIMO or OFDMA that addresses multiple STAs can use a similar modification to multi-TID BA control frame as the M-STA BAR 2100 shown in FIGURE 21 to address STAs using the STAIDs using the reserved bits of the per TID info.

The M downlink ACK/BA control frame 2300 includes at least thirty octets 2305 with at least eight fields 2310. The fields include a frame control 2310a comprising two octets, a duration 2310b comprising two octets, an RA 2310c comprising six octets, a TA 2310d comprising six octets, a BAR control 2310e comprising two octets, STAID 2310f comprising two octets, starting sequence control 2310g comprising two octets, a Block ACK bitmap 2310h and an FCS field 2310i comprising four octets. The STAID 2310f, starting sequence control 2310g and Block ACK bitmap 2310h are repeated 2315 for each STA. The RA field 2310c can be set to a broadcast address so that all STAs connected to the AP can decode it. The STAID 2310f includes STA-AID 2320 and a TID value 2325.

In certain embodiments, AP 102 responds individually to one or more of the STAs 104-118 with BA/ACK control frame using separate frequency resources when UL OFDMA was used to transmit data to the AP 102 from the STAs 104-118. The UL OFDMA occurs where each STA 104-118 transmits a data frame using a set of sub-carriers (tone units) to place its data and different STAs 104-118 use different sets of resource units to multiplex their data using uplink OFDMA to the AP 102. The AP 102 transmits the BA/ACK control frame using a subset of the same subcarriers (tone units) that the AP 102 received the data from the STA, such as STA 104. The BA/ACK control frames, each addressed to different STAs 104-118, are thus multiplexed using DL OFDMA. The span of the sub-carriers used for BA/ACK control frame for a STA, such as STA 104, is a subset of the span of the sub-carriers over which the data was received from the STA 104.

In certain embodiments, the AP 102 transmits the multi-STA ACK/BA control frame addressed to multiple STAs 104-118 in a duplicated OFDM format where the multi-STA ACK/BA control frame message is duplicated per 20MHz when the UL OFDMA uses bandwidth larger than 20MHz.

The embodiments disclosed herein enable scaling of wireless networks to accommodate an arbitrary number of users multiplexed using DL OFDMA/MU-MIMO. The embodiments disclosed herein also allow handling scenarios where no implicit uplink ACK is possible. The embodiments disclosed herein further provide multiplexing of ACK with piggybacked data. The embodiments disclosed herein further apply to scenarios with uplink allocation immediately following downlink allocation.

Although various features have been shown in the figures and described above, various changes may be made to the figures. For example, the size, shape, arrangement, and layout of components shown in FIGURES 1 through 22 are for illustration only. Each component could have any suitable size, shape, and dimensions, and multiple components could have any suitable arrangement and layout. Also, various components in FIGURES 1 through 22 could be combined, further subdivided, or omitted and additional components could be added according to particular needs. Further, each component in a device or system could be implemented using any suitable structure(s) for performing the described function(s). In addition, while some figures illustrate various series of steps, the various steps could overlap, occur in parallel, occur multiple times, or occur in a different order.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for receiving an acknowledgement for downlink transmission by a base station in a wireless communication system, the method comprising:

   transmitting a data block for each of a plurality of mobile stations in a downlink;
   allocating uplink resources (1605) for reception of a block acknowledgement (424) for the data block, based on information associated with the plurality of mobile stations; and
   receiving the block acknowledgement through the allocated uplink resources, wherein a number subcarriers (1615) of the uplink resources is determined based on a
   minimum number of subcarriers for the uplink resource, a number of subcarriers in a scheduled bandwidth, and a number of the plurality of mobile stations scheduled in an allocation of downlink resources.

2. The method of claim 1, wherein the information includes index information in which the plurality of mobile stations are listed when allocating downlink resources for transmission of the data block, the uplink resources are allocated to the plurality of mobile stations to correspond to index information.

3. The method of claim 1, wherein a packet for transmission of the data block includes media access control, MAC, protocol data unit, PDU, MPDU, and the block acknowledgement is acknowledgement information for the MPDU.

4. The method of claim 1, wherein a packet for transmission of the data block includes media access control, MAC, protocol data unit, PDU, ,MPDU, and the block acknowledgement is acknowledgement information for the MPDU, and
   wherein the block acknowledgement includes a start sequence number of the MPDU, and acknowledgement bits of MPDUs corresponding to successive sequence numbers from the start sequence number.

5. The method of claim 1, wherein a start position for each of the uplink resources is determined based on a start position for each of downlink resources occupied by downlink data that the plurality of mobile stations receive respectively, if the data block is a multi user packet.

6. The method of claim 1, wherein the block acknowledgement includes bitmap information including acknowledgement bits for downlink data that the plurality of mobile stations receive respectively.

7. The method of claim 1, wherein the block acknowledgement is transmitted together with additional information by the plurality of mobile stations, and the additional information includes at least one of transmission buffer status and channel status information of the plurality of mobile stations.

8. The method of claim 1, wherein the block acknowledgement is received using sequences allocated to the plurality of mobile stations for the block acknowledgement and the sequences is placed in the uplink resources and indicates whether the data block is received correctly.

9. A base station in a wireless communication system, the base station comprising:

a transceiver configured to transmit and receive data over a network; and
a controller configured to control allocating uplink resources for reception of a block acknowledgement for each data block transmitted to each of a plurality of mobile stations in a downlink and receiving the block acknowledgement through the allocated uplink resources,
wherein the uplink resources is allocated based on information associated with the plurality of mobile stations,
wherein a number subcarriers of the uplink resources is determined based on a minimum number of subcarriers for the uplink resource, a number of subcarriers in a scheduled bandwidth, and a number of the plurality of mobile stations scheduled in an allocation of downlink resources.

10. The base station of claim 9, wherein the base station is adapted to operate according to any one of claim 2 to claim 8.

11. A mobile station in a wireless communication system, the mobile station comprising:

a transceiver configured to transmit and receive data over a network; and
a controller configured to control determining a uplink resource, allocated to the mobile station, among uplink resources for reception of a block acknowledgement for a data block transmitted to each of a plurality of mobile stations in a downlink, based on information associated with the mobile station, and transmitting an acknowledgement for downlink data, received by the mobile station, through the determined uplink resource,
wherein a number subcarriers of the uplink resources is determined based on a minimum number of subcarriers for the uplink resource, a number of subcarriers in a scheduled bandwidth, and a number of the plurality of mobile stations scheduled in an allocation of downlink resources.

12. A method for transmitting an acknowledgement for downlink transmission by a mobile station in a wireless communication system, the method comprising:

receiving downlink data in a data block transmitted to a plurality of mobile stations in a downlink;
determining a uplink resource, allocated to the mobile station, among uplink resources for reception of a block acknowledgement for the data block, based on information associated with the mobile station; and
transmitting an acknowledgement for the received downlink data through the determined uplink resource,
wherein a number subcarriers of the uplink resources is determined based on a minimum number of subcarriers for the uplink resource, a number of subcarriers in a scheduled bandwidth, and a number of the plurality of mobile stations scheduled in an allocation of downlink resources.

**Patentansprüche**

1. Verfahren zum Empfangen einer Bestätigung für eine Downlink-Übertragung von einer Basisstation in einem Drahtloskommunikationssystem, wobei das Verfahren Folgendes umfasst:

Übertragen eines Datenblocks für jede einer Mehrzahl von Mobilstationen in einem Downlink;
Zuweisen von Uplink-Ressourcen (1605) zum Empfang einer Blockbestätigung (424) für den Datenblock basierend auf Informationen, die der Mehrzahl von Mobilstationen zugeordnet sind; und
Empfangen der Blockbestätigung durch die zugewiesenen Uplink-Ressourcen, wobei eine Anzahl von Unterträgern (1615) der Uplink-Ressourcen basierend auf einer minimalen Anzahl von Unterträgern für die Uplink-Ressource, einer Anzahl von Unterträgern in einer geplanten Bandbreite und einer Anzahl der Mehrzahl von Mobilstationen, die in einer Zuweisung von Downlink-Ressourcen geplant sind, bestimmt wird.

2. Verfahren nach Anspruch 1, wobei die Informationen Indexinformationen aufweisen, in denen die Mehrzahl von Mobilstationen aufgelistet ist, wenn Downlink-Ressourcen zur Übertragung des Datenblocks zugewiesen werden, die Uplink-Ressourcen der Mehrzahl von Mobilstationen zugewiesen werden, sodass sie Indexinformationen entsprechen.

3.  Verfahren nach Anspruch 1, wobei ein Paket zur Übertragung des Datenblocks eine Medienzugriffssteuerungs-, Media Access Control - MAC, Protokolldateneinheit, Protocol Data Unit - PDU, -MPDU aufweist und die Blockbestätigung Bestätigungsinformationen für die MPDU ist.

4.  Verfahren nach Anspruch 1, wobei ein Paket zur Übertragung des Datenblocks eine Medienzugriffssteuerungs-, Media Access Control - MAC, Protokolldateneinheit, Protocol Data Unit - PDU, -MPDU aufweist und die Blockbestätigung Bestätigungsinformationen für die MPDU ist, und wobei die Blockbestätigung eine Startsequenznummer der MPDU und Bestätigungsbits von MPDUs aufweist, die aufeinanderfolgenden Sequenznummern von der Startsequenznummer entsprechen.

5.  Verfahren nach Anspruch 1, wobei eine Startposition für jede der Uplink-Ressourcen basierend auf einer Startposition für jede Downlink-Ressource bestimmt wird, die durch Downlink-Daten besetzt ist, die die Mehrzahl von Mobilstationen jeweils empfängt, wenn der Datenblock ein Multi-User-Paket ist.

6.  Verfahren nach Anspruch 1, wobei die Blockbestätigung Bitmap-Informationen einschließlich Bestätigungsbits für Downlink-Daten aufweist, die die Mehrzahl von Mobilstationen jeweils empfängt.

7.  Verfahren nach Anspruch 1, wobei die Blockbestätigung zusammen mit zusätzlichen Informationen von der Mehrzahl von Mobilstationen übertragen wird und die zusätzlichen Informationen mindestens eine von Übertragungspufferstatus- und Kanalstatusinformationen der Mehrzahl von Mobilstationen aufweisen.

8.  Verfahren nach Anspruch 1, wobei die Blockbestätigung unter Verwendung von Sequenzen empfangen wird, die der Mehrzahl von Mobilstationen für die Blockbestätigung zugewiesen sind, und die Sequenzen in den Uplink-Ressourcen platziert werden und angeben, ob der Datenblock korrekt empfangen wird.

9.  Basisstation in einem Drahtloskommunikationssystem, wobei die Basisstation umfasst:

      einen Sendeempfänger, der konfiguriert ist, Daten über ein Netzwerk zu übertragen und zu empfangen; und
      eine Steuerung, die konfiguriert ist, die Zuweisung von Uplink-Ressourcen zum Empfang einer Blockbestätigung für jeden Datenblock, der an jede einer Mehrzahl von Mobilstationen in einem Downlink übertragen wird, und das Empfangen der Blockbestätigung durch die zugewiesenen Uplink-Ressourcen zu steuern;
wobei die Uplink-Ressourcen basierend auf Informationen zugewiesen werden, die der Mehrzahl von Mobilstationen zugeordnet sind, wobei eine Anzahl von Unterträgern der Uplink-Ressourcen basierend auf einer minimalen Anzahl von Unterträgern für die Uplink-Ressource, einer Anzahl von Unterträgern in einer geplanten Bandbreite und einer Anzahl der Mehrzahl von Mobilstationen, die in einer Zuweisung von Downlink-Ressourcen geplant sind, bestimmt wird.

10. Basisstation nach Anspruch 9, wobei die Basisstation ausgelegt ist, nach einem der Ansprüche 2 bis 8 betrieben zu werden.

11. Mobilstation zur Verwendung in einem Drahtloskommunikationssystem, wobei die Mobilstation Folgendes umfasst:

      einen Sendeempfänger, der zum Übertragen und Empfangen von Daten über ein Netzwerk konfiguriert ist; und
      eine Steuerung, die konfiguriert ist, das Bestimmen einer Uplink-Ressource, die der Mobilstation zugewiesen ist, unter Uplink-Ressourcen zum Empfang einer Blockbestätigung für einen Datenblock, der an jede einer Vielzahl von Mobilstationen in einer Downlink übertragen wird, basierend auf der Mobilstation zugeordneten Informationen und Übertragen einer Bestätigung für Downlink-Daten, die von der Mobilstation empfangen werden, durch die bestimmte Uplink-Ressource zu steuern, wobei eine Anzahl von Unterträgern der Uplink-Ressourcen basierend auf einer minimalen Anzahl von Unterträgern für die Uplink-Ressource, einer Anzahl von Unterträgern in einer geplanten Bandbreite und einer Anzahl der Mehrzahl von Mobilstationen, die in einer Zuweisung von Downlink-Ressourcen geplant sind, bestimmt wird.

12. Verfahren zum Übertragen einer Bestätigung für eine Downlink-Übertragung von einer Mobilstation in einem Drahtloskommunikationssystem, wobei das Verfahren Folgendes umfasst:

      Empfangen von Downlink-Daten in einem Datenblock, der an eine Mehrzahl von Mobilstationen in einem Downlink übertragen wird;
      Bestimmen einer Uplink-Ressource, die der Mobilstation zugewiesen ist, unter Uplink-Ressourcen zum Empfang einer Blockbestätigung für den Datenblock basierend auf Informationen, die der Mobilstation zugeordnet sind; und
      Übertragen einer Bestätigung für die empfangenen Downlink-Daten durch die bestimmte Uplink-Ressource,

wobei eine Anzahl von Unterträgern der Uplink-Ressourcen basierend auf einer minimalen Anzahl von Unterträgern für die Uplink-Ressource, einer Anzahl von Unterträgern in einer geplanten Bandbreite und einer Anzahl der Mehrzahl von Mobilstationen, die in einer Zuweisung von Downlink-Ressourcen geplant sind, bestimmt wird.

**Revendications**

1. Procédé de réception d'un accusé de réception pour une transmission de liaison descendante par une station de base dans un système de communication sans fil, le procédé comprenant :

la transmission d'un bloc de données pour chacune d'une pluralité de stations mobiles dans une liaison descendante ;
l'allocation de ressources de liaison montante (1605) pour une réception d'un accusé de réception de bloc (424) pour le bloc de données, sur la base d'informations associées à la pluralité de stations mobiles ; et
la réception de l'accusé de réception de bloc par l'intermédiaire des ressources de liaison montante allouées,
dans lequel un nombre de sous-porteuses (1615) des ressources de liaison montante est déterminé sur la base d'un nombre minimal de sous-porteuses pour la ressource de liaison montante, d'un nombre de sous-porteuses dans une largeur de bande programmée, et d'un nombre de la pluralité de stations mobiles programmées dans une allocation de ressources de liaison descendante.

2. Procédé selon la revendication 1, dans lequel les informations comprennent des informations d'index dans lesquelles la pluralité de stations mobiles sont listées lors de l'allocation de ressources de liaison descendante pour une transmission du bloc de données, les ressources de liaison montante sont allouées à la pluralité de stations mobiles pour correspondre à des informations d'index.

3. Procédé selon la revendication 1, dans lequel un paquet pour une transmission du bloc de données comprend une unité de données de protocole, PDU, de commande d'accès au support, MAC, MPDU, et l'accusé de réception de bloc est des informations d'accusé de réception pour la MPDU.

4. Procédé selon la revendication 1, dans lequel un paquet pour une transmission du bloc de données comprend une unité de données de protocole, PDU, de commande d'accès au support, MAC, MPDU, et l'accusé de réception de bloc est des informations d'accusé de réception pour la MPDU, et
dans lequel l'accusé de réception de bloc comprend un numéro de séquence de début de la MPDU, et des bits d'accusé de réception de MPDU correspondant à des numéros de séquence successifs à partir du numéro de séquence de début.

5. Procédé selon la revendication 1, dans lequel une position de début pour chacune des ressources de liaison montante est déterminée sur la base d'une position de début pour chacune de ressources de liaison descendante occupées par des données de liaison descendante que la pluralité de stations mobiles reçoivent respectivement, si le bloc de données est un paquet d'utilisateurs multiples.

6. Procédé selon la revendication 1, dans lequel l'accusé de réception de bloc comprend des informations de bitmap comprenant des bits d'accusé de réception pour des données de liaison descendante que la pluralité de stations mobiles reçoivent respectivement.

7. Procédé selon la revendication 1, dans lequel l'accusé de réception de bloc est transmis avec des informations supplémentaires par la pluralité de stations mobiles, et les informations supplémentaires comprennent au moins l'une d'informations de statut de mémoire tampon de transmission et de statut de canal de la pluralité de stations mobiles.

8. Procédé selon la revendication 1, dans lequel l'accusé de réception de bloc est reçu en utilisant des séquences allouées à la pluralité de stations mobiles pour l'accusé de réception de bloc et les séquences sont placées dans les ressources de liaison montante et indiquent si le bloc de données est correctement reçu.

9. Station de base dans un système de communication sans fil, la station de base comprenant :

un émetteur-récepteur configuré pour effectuer la transmission et la réception de données sur un réseau ; et
un organe de commande configuré pour commander l'allocation de ressources de liaison montante pour une réception d'un accusé de réception de bloc pour chaque bloc de données transmis à chacune d'une pluralité de stations mobiles dans une liaison descendante et la réception de l'accusé de réception de bloc par l'intermédiaire des ressources de liaison montante allouées,
dans lequel les ressources de liaison montante sont allouées sur la base d'informations associées à la pluralité de stations mobiles,

dans lequel un nombre de sous-porteuses des ressources de liaison montante est déterminé sur la base d'un nombre minimal de sous-porteuses pour la ressource de liaison montante, d'un nombre de sous-porteuses dans une largeur de bande programmée, et d'un nombre de la pluralité de stations mobiles programmées dans une allocation de ressources de liaison descendante.

10. Station de base selon la revendication 9, dans laquelle la station de base est apte à fonctionner selon l'une quelconque des revendications 2 à 8.

11. Station mobile dans un système de communication sans fil, la station mobile comprenant :

un émetteur-récepteur configuré pour effectuer la transmission et la réception de données sur un réseau ; et

un organe de commande configuré pour commander la détermination d'une ressource de liaison montante, allouée à la station mobile, parmi des ressources de liaison montante pour une réception d'un accusé de réception de bloc pour un bloc de données transmis à chacune d'une pluralité de stations mobiles dans une liaison descendante, sur la base d'informations associées à la station mobile, et la transmission d'un accusé de réception pour des données de liaison descendante, reçues par la station mobile, par l'intermédiaire de la ressource de liaison montante déterminée,

dans lequel un nombre de sous-porteuses des ressources de liaison montante est déterminé sur la base d'un nombre minimal de sous-porteuses pour la ressource de liaison montante, d'un nombre de sous-porteuses dans une largeur de bande programmée, et d'un nombre de la pluralité de stations mobiles programmées dans une allocation de ressources de liaison descendante.

12. Procédé de transmission d'un accusé de réception pour une transmission de liaison descendante par une station mobile dans un système de communication sans fil, le procédé comprenant :

la réception de données de liaison descendante dans un bloc de données transmis à une pluralité de stations mobiles dans une liaison descendante ;

la détermination d'une ressource de liaison montante, allouée à la station mobile, parmi des ressources de liaison montante pour une réception d'un accusé de réception de bloc pour le bloc de données, sur la base d'informations associées à la station mobile ; et

la transmission d'un accusé de réception pour les données de liaison descendante reçues par l'intermédiaire de la ressource de liaison montante déterminée,

dans lequel un nombre de sous-porteuses des ressources de liaison montante est déterminé sur la base d'un nombre minimal de sous-porteuses pour la ressource de liaison montante, d'un nombre de sous-porteuses dans une largeur de bande programmée, et d'un nombre de la pluralité de stations mobiles programmées dans une allocation de ressources de liaison descendante.

[Fig. 1]

[Fig. 2]

[Fig. 3]

[Fig. 4]

400

Immediate Block Ack

| 412 | ADDBA Request |
| 414 | ACK |
| 416 | ADDBA Response |

| 420 | QoS Data MPDU |
| 422 | BAR |
| 424 | BA |

multiple times

| 426 | DELBA Request |
| 428 | ACK |

Originator — 405          Recipient — 410

450

Delayed Block Ack

| 412 | ADDBA Request |
| 414 | ACK |
| 416 | ADDBA Response |
|     | ACK — 418 |

Setup

| 420 | QoS Data MPDU — 420 |
|     | Data Transfer (420) |
| 422 | BAR — 422 |
|     | ACK |
| 424 | BA — 424 |
|     | ACK |

| 426 | DELBA Request |
| 428 | ACK | Tear down |

Originator — 405          Recipient — 410

[Fig. 5]

505

| Octets: | 2 | 2 | 6 | 6 | 2 | 2 | 4 |
|---|---|---|---|---|---|---|---|
| 510 | Frame Control | Duration | RA | TA | BAR Control | Starting Sequence Control | FCS |

510a      510b

[Fig. 6]

510a

| B0 | B1 | B2 | B3   B11 | B12   B15 |
|---|---|---|---|---|
| 610 | BAR Ack Policy | Multi-TID | Compressed Bitmap | Reserved | TID/ NumTIDs |

615      620      625      630      635

[Fig. 7]

510b

| B0 | B3 | B4 | B15 |
|---|---|---|---|
| Reserved | | Starting Sequence Number | |

710                705

[Fig. 8]

800

| Octets: 2 | 2 | 6 | 6 | 2 | 2 | 2 | | 4 |
|---|---|---|---|---|---|---|---|---|
| Frame Control | Duration | RA | TA | BAR Control | Per TID Info | Starting Sequence Control | ⋯ | FCS |

820              805      810

Repeat for each TID

815

[Fig. 9]

805

| B0 | B11 | B12 | B15 |
|---|---|---|---|
| Reserved | | TID | |

905                910

[Fig. 10]

1000

| Octets: 2 | 2 | 6 | 6 | 2 | 2 | 8 or 128 | 4 |
|---|---|---|---|---|---|---|---|
| Frame Control | Duration | RA | TA | BA Control | Starting Sequence Control | Block Ack Bitmap | FCS |

1005  1010  1015  1020  1025

[Fig. 11]

1015

| BAR Ack Policy | Multi-TID | Compressed Bitmap | Reserved | TID/ NumTIDs |
|---|---|---|---|---|

B0     B1     B2     B3    B11 B12    B15

1105     1110     1115     1125     1120

[Fig. 12]

1200

Octets: 2   2   6   6   2   2   2   8   4

| Frame Control | Duration | RA | TA | BA Control | Per TID Info | Starting Sequence Control | BA Bitmap | ... | FCS |
|---|---|---|---|---|---|---|---|---|---|

1205   1210   1215    Repeat for each TID

[Fig. 13]

1300

[Fig. 14]

1400

[Fig. 15]

DOWNLINK ALLOCATION

UL ACK resource matching
based on downlink allocation

[Fig. 16]

[Fig. 17]

1705

DOWNLINK ALLOCATION

UL ACK Multiplexing for
DL Allocation

STA#3        STA#4

STA#2

STA#1 ———→

STA#7

STA#5 ———→        STA#6

STA#8 ———→

Frequency    Space
time

STA#3
ACK SEQUENCE#3
(1720)

STA#4
ACK SEQUENCE#4
(1725)

STA#2
ACK SEQUENCE#2
(1715)

STA#1
ACK SEQUENCE#1
(1710)

STA#7
ACK SEQUENCE#3
(1720)

STA#5 ———→
ACK SEQUENCE#1
(1710)

STA#6
ACK SEQUENCE#2
(1715)

ACK Resource ———→
for STA#8

Frequency    Code
time

27

[Fig. 18]

[Fig. 19]

[Fig. 20]

[Fig. 21]

| 2 | 2 | 6 | 6 | 2 | 2 | 2 | | 4 |
|---|---|---|---|---|---|---|---|---|
| Frame Control | Duration | RA | TA | BAR Control | STAID Info | Starting Sequence Control | ... | FCS |
| 2110a | 2110b | 2110c | 2110d | 2110e | 2110f | 2110g | | 2110h |

Octets::

2105

2110

2100

Repeat for each STA

2115

[Fig. 22]

HE SIG Indicates that an uplink
data transmission from the STAs
will follow the downlink
transmission

Block ACK for downlink MPDUs
received is transmitted along with
the uplink data

[Fig. 23]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010260114 A1
- US 2011286402 A1
- US 2010046457 A1
- WO 2009123856 A1